# EUROPÄISCHE PATENTSCHRIFT

(11) **EP 1 241 590 B1**
(45) Veröffentlichungstag und Bekanntmachung des Hinweises auf die Patenterteilung: **09.11.2005**
(21) Anmeldenummer: 02004571.2
(22) Anmeldetag: 27.02.2002
(51) Int. Cl.: G06F 17/30

(54) **Verfahren zum Ermitteln gültiger Adresskodes**
Method of determining valid address codes
Procédé pour déterminer des codes d'adresses valables

(30) Priorität: 13.03.2001 DE 10111885
(43) Veröffentlichungstag der Anmeldung: 18.09.2002
(73) Patentinhaber: SIEMENS AKTIENGESELLSCHAFT, 80333 München (DE)
(72) Erfinder: Jakesch, Wolfgang, 78479 Reichenau (DE)
(74) Vertreter: Berg, Peter

(56) Entgegenhaltungen:
- DE-A- 19 808 077
- US-A- 5 459 717

## Beschreibung

Die Erfindung betrifft ein Verfahren zum Ermitteln gültiger Adresskodes zu gültigen Adressdaten unter Verwendung eines Adresswörterbuches.

Das automatische Adresslesen von Sendungen ist eine weltweit verbreitete Technologie beim Sortieren und Verteilen der Sendungen. Die Adressen auf den Sendungen beinhalten dabei einen Postkode, Ortsangaben, Straßennamen, Hausnummern, ggf. Appartementnummern und Namen, sowie evtl. weitere kennzeichnenden Angaben. Der Postkode besteht entweder aus Zahlen (ZIP-Code in US, Postleitzahl in DE) und beschreibt den Ort oder aus einem Gemisch von Zahlen und Buchstaben und beschreibt die Adresse herunter bis zur Straße.

Beim automatischen Lesevorgang in einem OCR-Leser werden die Zeichen und dann die einzelnen Elemente der Adresse gelesen. Danach erfolgt ein Abgleich mit den Eintragungen eines Adresswörterbuches und mit Hilfe des Adresswörterbuches die Ermittlung eines die Adresse bis hinunter zu Hausnummern einer Straße beschreibenden Adresskodes (Postkode und weitere in der Adressdatenbank eingetragene Kodezeichen). Beschreibt der Postkode die Adresse hinunter bis zur Straße, erfolgt beim Lesen in der OCR-Einheit ein Abgleich der gelesenen Postkodedaten und der gelesenen Städte- und Straßennamen sowie Hausnummer auf Gültigkeit.

Diese Technologie ist jedoch nicht perfekt. Die beim automatischen Lesen ermittelte Verteilinformation stimmt in manchen Fällen nicht mit der Verteilinformation auf der Postsendung überein.

Durch Vergleich des beim automatischen Lesen der Adresse bestimmten Adresskodes mit allen für diese Adresse gültigen Adresskodes kann festgestellt werden, ob der beim automatischen Lesen bestimmte Adresskode richtig oder falsch ist. Um dies durchzuführen, sind die gültigen Adresskodes der jeweiligen Adresse zu ermitteln.

Um dazu notwendige, gültige Adressdaten zu erhalten, wurde bisher nach dem Stand der Technik die Adresse manuell an einem Videokodierplatz eingegeben. Dann wurde ein Adresswörterbuch, in welchem Adressen und zugehörige Adresskodes eingetragen sind, mit den eingegebenen Adressdaten nach entsprechenden Einträgen mit den Adresskodes mittels Lookup interaktiv von dem Operateur durchsucht, wobei dieses Durchsuchen auf Erfahrungswerte des jeweiligen Operateurs beruht. Die so ermittelten Adresskodes wurden dann als gültige Adresskodes ausgegeben.

Dieses Vorgehen ist zeitintensiv, fehleranfällig und liefert meist nicht alle gültigen Adresskodes einer Adresse. Darüberhinaus muss das Verfahren bei jedem Update des Lookup erneut durchgeführt werden.

Das Dokument DE 198 08 077 (NEC Corp.) beschreibt ein Verfahren zum Durchsuchen eines elektronischen Adressbuches nach dem Adresskode einer zunächst ungültigen Adresse. Die Datenbank wird solange auf der Basis immer gröberer Adressdaten und deren Kombinationen durchsucht, bis ein Anzahl möglicher Adressen gefunden wird und das Verfahren endet. Bei dem in diesem Dokument beschriebenen Verfahren wird zum einen nicht von gültigen Adressdaten ausgegangen und zum anderen wird pro gefundener Adresse nur ein Adresskode ausgegeben.

Der im Anspruch 1 angegebenen Erfindung liegt die Aufgabe zugrunde, ein Verfahren zum Ermitteln gültiger Adresskodes zu gültigen Adressdaten mit Hilfe eines Adresswörterbuches zu schaffen, bei dem alle für die Adresse gültigen Adresskodes in kurzer Zeit ermittelt werden.

Erfindungsgemäß wird das Adresswörterbuch, in dem für ein bestimmtes Territorium alle zulässigen Adressangaben mit den dazugehörenden Adresskodes recherchierbar abgespeichert sind, automatisch anhand der gültigen Adressdaten und von jeweils daraus abgeleiteten sämtlichen Vergröberungsstufen durchsucht. Die in den zu jeder gültigen Adresse einschließlich sämtlicher zugehörender Vergröberungsstufen gefundenen Wörterbucheinträgen enthaltenen Adresskodes werden dann als gültige Adresskodes ausgegeben. Damit entfällt der aufwendige manuelle und erfahrungsabhängige, bisherige Suchprozess im Adresswörterbuch.

Vorteilhaft ist es, zur Ableitung der ersten Vergröberungsstufe von der vollständigen Adresse den diese am feinsten beschreibenden Teil zu entfernen, zur Ableitung der zweiten Vergröberungsstufe von der ersten Vergröberungsstufe den diese am feinsten beschreibenden Teil zu entfernen und dies, solange ein entsprechender Eintrag im Adresswörterbuch gefunden wird, weiterzuführen.

Vorteilhaft ist es auch, die gültigen Adressdaten durch manuelles Eingeben zu erzeugen.

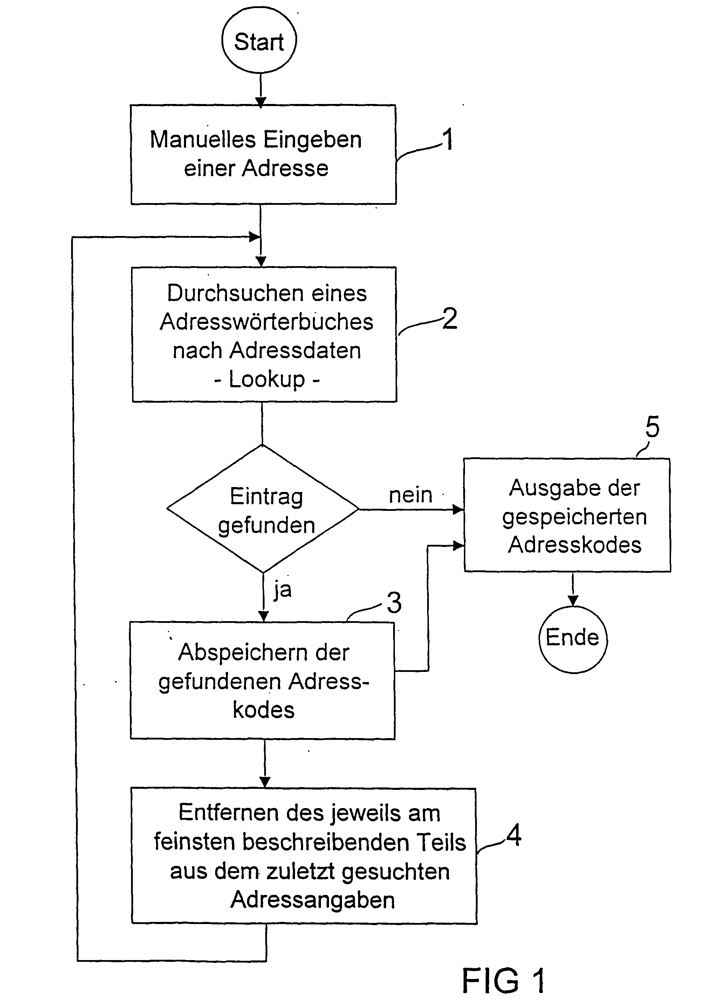

Anschließend wird die Erfindung in einem Ausführungsbeispiel anhand der Zeichnung näher erläutert.
Dabei zeigt
- FIG 1: den Verfahrensablauf anhand eines Flussbildes.

Zum Erzeugen gültiger Adressdaten wird zuerst eine Adresse manuell eingegeben 1. Danach wird in einem Adresswörterbuch, in dem für ein bestimmtes Territorium alle zulässigen Adressangaben mit den zugehörenden Adresskodes recherchierbar gespeichert sind, nach den eingegebenen Adressdaten dieser Adresse gesucht 2.

Wurde ein entsprechender Eintrag gefunden, so wird der enthaltene Adresskode abgespeichert 3. Danach wird von diesen Adressangaben der am feinsten beschreibende Teil entfernt 4. Anschließend erfolgt ein weiteres Durchsuchen des Adresswörterbuches mit diesen reduzierten / vergröberten Adressangaben 2. Wurde ein Eintrag gefunden, so wird der darin enthaltene Adresskode ebenfalls abgespeichert 3 und von diesen um einen Teil reduzierten Adressangaben wird der nunmehr am feinsten beschreibende Teil ebenfalls entfernt 4. Damit wird das Adresswörterbuch durchsucht usw. Dieser Prozess wird solange durchgeführt, bis kein Eintrag mehr gefunden wird. Dann erfolgt die Ausgabe der während dieses Ablaufes gespeicherten Adresskodes als gültige Adresskodes 5 und die Beendigung der Ermittlung der für die eingegebene Adresse gültigen Adresskodes. Wurde mit den eingegebenen Adressdaten schon am Anfang kein Eintrag im Adresswörterbuch gefunden (falsche Adressangaben), erfolgt sofort die Beendigung des Ablaufes.

Anhand einer US-Adresse wird dies kurz erläutert:
**INDEPENDENCE BLUE CROSS**
**1901 MARKET STREET STE 3**
**PHILADELPHIA PA 19103**

Dessen Postcode lautet: 19103-1475-01
Die dazugehörigen Adresselemente sind:
*City***="PHILADELPHIA"**, *State*="**PA**", *Zip Code*="**19103**"
*Primary Number*="**1901**", *Street*="**MARKET**", *Suffix*="**ST**"
*Secondary Name*="**STE**", *Secondary Number*="**3**"
*Firm*="**INDEPENDENCE BLUE CROSS"**

Dazu gibt es folgende Vergröberungen
**1901 MARKET STREET STE 3**
**PHILADELPHIA PA 19103**
Dessen Postcode lautet: 19103-1400-03
**1901 MARKET STREET STE**
**PHILADELPHIA PA 19103**
Dessen Postcode lautet: 19103-1400-99
**1901 MARKET STREET**
**PHILADELPHIA PA 19103**
Dessen Postcode lautet: 19103-1414-01
**PHILADELPHIA PA 19103**
Dessen Postcode lautet : 19103.
**PHILADELPHIA PA**
Dessen Postcode lautet: 19100.

Diese hier aufgeführten Adresskodes sind sämtliche gültigen Adresskodes zur angegebenen Adresse.

## Patentansprüche

1. Elektronisches Verfahren zum Ermitteln von gültigen Adresskodes zu gültigen Adressdaten unter Verwendung eines elektronischen Adresswörterbuches, in dem für ein bestimmtes Territorium alle zulässigen Adressangaben mit den dazugehörenden Adresskodes recherchierbar abgespeichert sind, und das automatisch anhand der gültigen Adressdaten und von jeweils daraus abgeleiteten sämtlichen Vergröberungsstufen durchsucht wird **dadurch gekennzeichnet, dass** die in den zu jeder gültigen Adresse einschließlich sämtlicher zugehöriger Vergröberungsstufen gefundenen Wörterbucheinträge enthaltenen Adresskodes als gültige Adresskode ausgegeben werden.

2. Verfahren nach Anspruch 1, **dadurch gekennzeichnet, dass** zur Ableitung der ersten Vergröberungsstufe von der vollständigen Adresse der diese am feinsten beschreibende Teil entfernt wird, zur Ableitung der zweiten Vergröberungsstufe von der ersten Vergröberungsstufe der diese am feinsten beschreibende Teil entfernt wird und dies, solange ein entsprechender Eintrag im Adresswörterbuch gefunden wird, weitergeführt wird.

3. Verfahren nach Anspruch 1, **dadurch gekennzeichnet, dass** die gültigen Adressdaten durch manuelles Eingeben erzeugt werden.

## Claims

1. Electronic method for ascertaining valid address codes for valid address data using an electronic address dictionary which stores all the permissible address details with the associated address codes in searchable form for a particular territory and which is automatically searched using the valid address data and all the coarsening stages respectively derived therefrom, **characterized in that** the address codes contained in the dictionary entries found for each valid address, including all the associated coarsening stages, are output as a valid address code.

2. Method according to Claim 1, **characterized in that** the first coarsening stage is derived by removing from the full address the part which describes it most precisely, the second coarsening stage is derived by removing from the first coarsening stage the part which describes it most precisely, and this is continued for as long as an appropriate entry is found in the address dictionary.

3. Method according to Claim 1, **characterized in that** the valid address data are produced by manual input.

## Revendications

1. Procédé électronique pour déterminer des codes d'adresses valables, relatifs à des données d'adresses valables, en employant un dictionnaire d'adresses électronique, dans lequel toutes les indications autorisées pour un territoire défini sont enregistrées, de manière à pouvoir être recherchées, avec les codes d'adresses associés et dans lequel il est procédé à une exploration automatique à l'aide des données d'adresses valables à partir de l'ensemble des étapes d'approximation, respectivement déduites à partir de celles-ci, **caractérisé en ce que** les codes d'adresses, contenus dans les enregistrements des dictionnaires d'adresses trouvés par rapport à chaque adresse valable, y compris l'ensemble des étapes d'approximation associées, sont édités en tant que code d'adresse valable.

2. Procédé selon la revendication 1, **caractérisé en ce que**, pour déduire la première étape d'approximation de l'adresse complète, la partie descriptive la plus fine sera éliminée ; pour déduire la deuxième étape d'approximation de la première étape d'approximation, la partie descriptive la plus fine est éliminée et la procédure se poursuit, jusqu'à ce qu'un enregistrement correspondant soit trouvé dans le dictionnaire d'adresses.

3. Procédé selon la revendication 1, **caractérisé en ce que** les données d'adresses valables sont produites par une entrée manuelle.
